Europäisches Patentamt

European Patent Office

Office européen des brevets

(11) Numéro de publication: **0 330 598**
**A1**

## DEMANDE DE BREVET EUROPEEN

(21) Numéro de dépôt: **89470002.0**

(22) Date de dépôt: **21.02.89**

(51) Int. Cl.⁴: **B 65 F 1/00**
**B 65 D 88/54**

(30) Priorité: **22.02.88 FR 8802275**

(43) Date de publication de la demande:
**30.08.89 Bulletin 89/35**

(84) Etats contractants désignés:
**AT BE CH DE IT LI LU NL**

(71) Demandeur: **Deckert, Robert**
**Gironcourt sur Vraine**
**F-88170 Chatenois (FR)**

(72) Inventeur: **Deckert, Robert**
**Gironcourt sur Vraine**
**F-88170 Chatenois (FR)**

(74) Mandataire: **Poupon, Michel**
**3, rue Thiers BP 421**
**F-88011 Epinal Cédex (FR)**

(54) Conteneur pour la récupération de produits liquides usagés.

(57) Conteneur, destiné en particulier à être disposé sur la voie publique pour la récupération de produits liquides usagés, du type comportant un bâti à l'intérieur duquel est disposée une cuve, le bâti comportant un orifice dans lequel est vidé ledit liquide usagé et communiquant avec la cuve, caractérisé en ce que l'orifice consiste en un tiroir (2) pouvant être ouvert ou fermé par l'utilisateur, tiroir dans lequel est versé le produit liquide dont l'utilisateur souhaite se débarrasser, l'ouverture, respectivement la fermeture du tiroir entrainant l'ouverture, respectivement la fermeture d'une vanne (25) de mise en communication, respectivement de séparation, du tiroir (2) et de la cuve (4).

FIG. 4

EP 0 330 598 A1

## Description

### Conteneur pour la récupération de produits liquides usagés

La présente invention a pour objet un conteneur, destiné en particulier à être disposé sur la voie publique pour la récupération de produits liquides usagés, du type comportant un bâti à l'intérieur duquel est disposée une cuve, le bâti comportant un orifice dans lequel est vidé ledit liquide usagé et communiquant avec la cuve.

On connaît déjà des conteneurs de ce type, qui s'apparentent aux conteneurs pour la récupération du verre ou du papier, par exemple de la demande de brevet de R.F.A. publiée avant examen DE 3 635 155.

Le conteneur décrit dans cette demande est cependant de structure complexe et ne comporte pas de sécurités suffisantes au niveau de l'utilisation.

L'invention a pour objet de proposer un conteneur qui soit d'usage simple et qui présente toutes les sécurités voulues au niveau des dégradations, des utilisations abusives et de l'environnement.

Conformément à l'invention, ce résultat est obtenu avec un conteneur, destiné en particulier à être disposé sur la voie publique pour la récupération de produits liquides usagés, du type comportant un bâti à l'intérieur duquel est disposée une cuve, le bâti comportant un orifice dans lequel est vidé ledit liquide usagé et communiquant avec la cuve, caractérisé en ce que l'orifice consiste en un tiroir pouvant être ouvert ou fermé par l'utilisateur, tiroir dans lequel est versé le produit liquide dont l'utilisateur souhaite se débarrasser, l'ouverture, respectivement la fermeture du tiroir entrainant l'ouverture, respectivement la fermeture d'une vanne de mise en communication, respectivement de séparation, du tiroir et de la cuve.

De cette manière, la cuve est fermée lorsque le tiroir est rentré, ce qui est la position de repos, et ceci évite que, en cas de renversement du conteneur, par exemple par un véhicule ou par dégradation, le contenu ne se répande sur la sol.

De manière avantageuse, et pour éviter l'ouverture accidentelle du conteneur en particulier par des enfants, on prévoiera sur le conteneur une serrure de condamnation du déplacement du tiroir, celui-ci ne pouvant intervenir que après un mouvement de déverrouillage volontaire de la part de l'utilisateur, le moyen de déverrouillage étant situé au dessus du conteneur pour éviter sa manipulation par des enfants.

Selon un autre mode avantageux de mise en oeuvre, on pourra prévoir des moyens de rappel automatique du tiroir en position fermée, afin que celui-ci ne reste pas ouvert inopinément après l'utilisation.

Enfin, le conteneur pourra être complété par une structure annexe intégrée ou non à celui-ci pour le stockage des récipients vides ayant contenu les liquides usagés, en particulier de l'huile de moteur (voitures, camions, engins agricoles, etc...).

On comprendra mieux l'invention à l'aide de la description faite ci-après d'un mode non limitatif de mise en oeuvre, en référence aux dessins annexés dans lesquels:

- la figure 1 est une vue de face de l'ensemble du conteneur avec une structure d'habillage pour l'intégrer à l'environnement;
- la figure 2 est une vue en coupe longitudinale du tiroir;
- la figure 3 est une vue en coupe longitudinale du verrouillage du tiroir,
- la figure 4 est une vue en coupe longitudinale du mécanisme de commande de la vanne par le déplacement du tiroir.

Le conteneur selon l'invention, généralement référencé (1) comporte essentiellement et schématiquement un tiroir (2) communiquant par une conduite (3) au moins partiellement souple avec une cuve de récupération (4).

Le conteneur peut être habillé extérieurement de toute manière permettant son intégration esthétique à l'environnement, urbain ou rural, par exemple en bois ou tout autre matériau. Il possède une face frontale sur laquelle pourront être rapportées toutes les indications d'utilisation, la destination, etc... Il comportera également un ou plusieurs crochets de portage pour son déplacement en vue de la vidange.

De préférence il sera disposé sur un socle en béton muni de rebords, évitant toute pollution en cas d'incidents lors de la vidange dans le tiroir, ou en cas de renversement du conteneur, malgré la présence des sécurités.

Avantageusement, le conteneur comportera un ou plusieurs hayons latéraux (5,6) dans lesquels seront insérés les bidons contenant le liquide récupéré en particulier des bidons d'huile.

Les hayons seront articulés en partie basse pour récupérer lesdits bidons lorsque les hayons sont pleins.

Le conteneur comportera, visibles de l'extérieur, une jauge mécanique (7) visible et une jauge électrique (8) avec témoin lumineux (9) de remplissage alimentée de manière autonome par une batterie (10). Ce voyant indique à l'utilisateur que le conteneur est plein.

On pourra également, pour des cas particuliers, prévoir un blocage automatique direct ou indirect du tiroir lorsque la cuve est pleine.

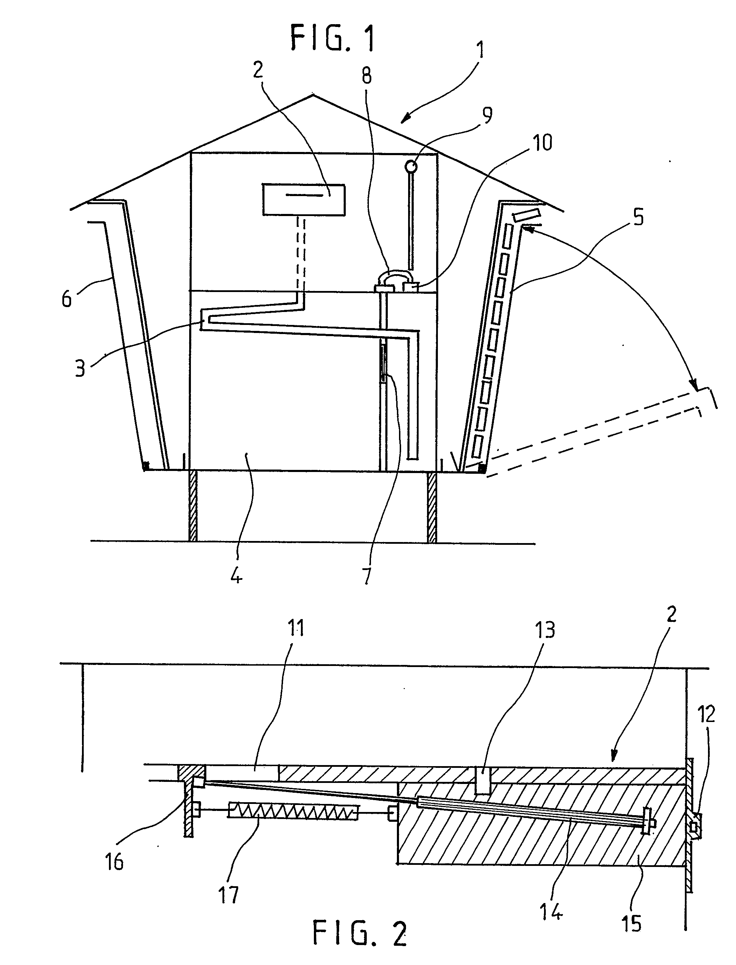

On se référera maintenant à la figure 2.

Le tiroir (2) est de type classique et coulisse sur des glissières (11) parallèles entre elles.

Il comporte une poignée de commande (12). Sur le bâti est ménagée une butée (13) de structure quelconque qui limite la sortie du tiroir.

Le déplacement du tiroir peut de manière optionnelle être aidé par un vérin de poussée (14) fixé d'une part au corps (15) du tiroir et d'autre part à une patte de fixation (16) solidaire du bâti, ainsi que par un ressort de rappel (17) fixé au tiroir et à la patte de fixation (16). Bien sûr les rôles du vérin et du ressort peuvent être inversés.

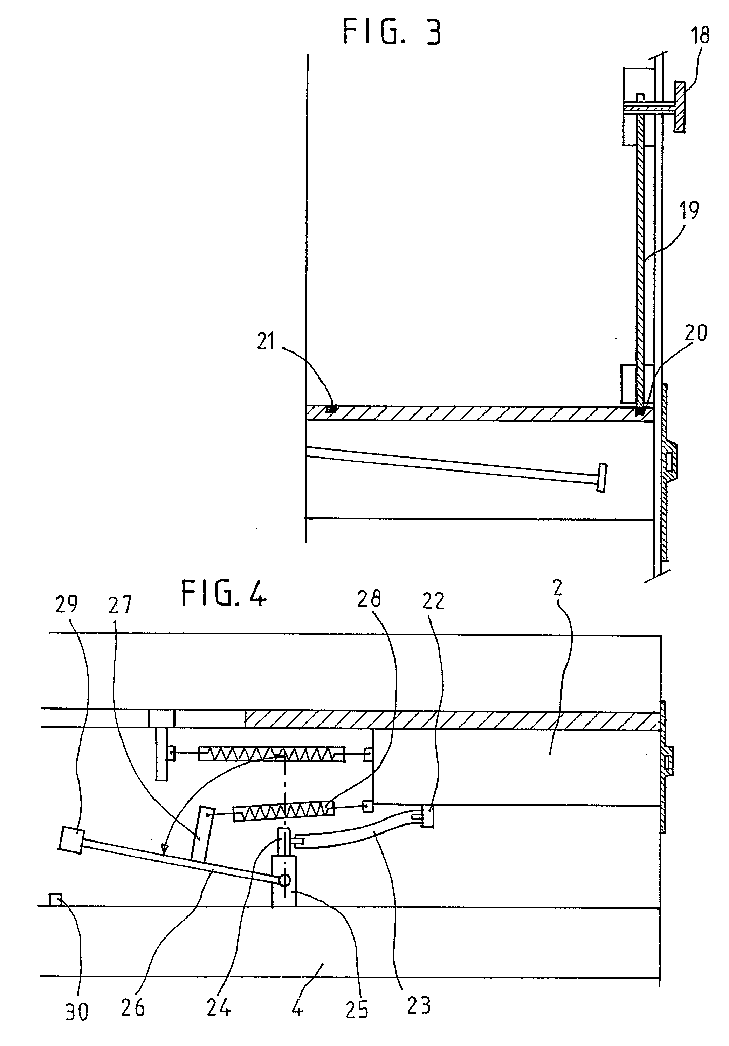

On a représenté à la figure 3 le système de sécurité. Celui-ci se compose essentiellement d'une poignée (18) actionnée par l'utilisateur et qui commande la levée d'une tringle verticale (19) qui coopère avec des crans (20,21) du tiroir et d'une glissière.

On comprendra que en tournant la poignée (18) on déverrouille le tiroir à partir de sa position rentrée et que de l'autre main l'utilisateur peut retirer le tiroir vers lui.

En relachant la poignée (18), la tringle (19) retombe par inertie dans le cran (21) lorsque celui-ci arrive en vis à vis de ladite tringle lors du retrait du tiroir.

On décrira maintenant le fonctionnement de la mise en communication du tiroir et de la cuve.

Le tiroir comporte un orifice de vidange (22). Afin que le liquide récupéré s'écoule vers cet orifice le fond du tiroir sera incliné en direction dudit orifice.

L'orifice (22) est relié par un conduite souple (23) à un orifice d'entrée (24) de la cuve, séparé de celle-ci par une vanne ou robinet (25). La manoeuvre du robinet est commandée par un levier de commande (26) relié lui-même par une patte (27) au fond du tiroir (2), soit par le biais d'un ressort (28) soit par une biellette de fonction équivalente.

A son extrémité distale, le levier comporte un contrepoids de fermeture (29). Dans son mouvement de descente (fermeture de la vanne), celui-ci est amorti par un tampon en caoutchouc (30) fixé sur le bâti.

Le levier (26) commandera également, de manière analogue, un second robinet, non représenté, de mise à l'air de la cuve lors du remplissage.

L'invention trouve une application avantageuse pour la récupération des huiles usagées en toute sécurité, la fermeture automatique des vannes lorsque le tiroir est rentré rendant la cuve étanche.

**Revendications**

1. Conteneur, destiné en particulier à être disposé sur la voie publique pour la récupération de produits liquides usagés, du type comportant un bâti à l'intérieur duquel est disposée une cuve, le bâti comportant un orifice dans lequel est vidé ledit liquide usagé et communiquant avec la cuve, caractérisé en ce que l'orifice consiste en un tiroir (2) pouvant être ouvert ou fermé par l'utilisateur, tiroir dans lequel est versé le produit liquide dont l'utilisateur souhaite se débarrasser, l'ouverture, respectivement la fermeture du tiroir entrainant l'ouverture, respectivement la fermeture d'une vanne (25) de mise en communication, respectivement de séparation, du tiroir (2) et de la cuve (4).

2. Conteneur selon la revendication 1, caractérisé en ce qu'il comporte un ou plusieurs hayons latéraux (5,6).

3. Conteneur selon l'une quelconque des revendications 1 et 2, caractérisé en ce qu'il comporte, visibles de l'extérieur, une jauge mécanique (7) visible et une jauge électrique (8) avec témoin lumineux (9) de remplissage alimentée de manière autonome par une batterie (10).

4. Conteneur selon l'une quelconque des revendications 1 à 3, caractérisé en ce que le tiroir (2) coulisse sur des glissières (11) parallèles entre elles et que sur le bâti est ménagée une butée (13) limitant la sortie du tiroir.

5. Conteneur selon l'une quelconque des revendications 1 à 4, caractérisé en ce que le déplacement du tiroir peut être aidé par un vérin de poussée (14) fixé d'une part au corps (15) du tiroir et d'autre part à une patte de fixation (16) solidaire du bâti, ainsi que par un ressort de rappel (17) fixé au tiroir et à la patte de fixation (16).

6. Conteneur selon l'une quelconque des revendications 1 à 5, caractérisé en ce qu'il comporte un système de sécurité se composant d'une poignée (18) actionnée par l'utilisateur et qui commande la levée d'une tringle verticale (19) qui coopère avec des crans (20,21) du tiroir et d'une glissière.

7. Conteneur selon l'une quelconque des revendications 1 à 6, caractérisé en ce que le tiroir comporte un orifice de vidange (22) relié par une conduite souple (23) à un orifice d'entrée (24) de la cuve, séparé de celle-ci par une vanne ou un robinet (25), la manoeuvre du robinet étant commandée par un levier de commande (26) relié lui-même par une patte (27) au fond du tiroir (2), par le biais d'un ressort (28).

8. Conteneur selon la revendication 7, caractérisé en ce que à son extrémité distale le levier comporte un contrepoids de fermeture (29) qui, dans son mouvement de descente est amorti par un tampon en caoutchouc (30) fixé sur le bâti.

9. Conteneur selon l'une quelconque des revendications 7 et 8, caractérisé en ce que le levier (26) commande également un second robinet de mise à l'air de la cuve lors du remplissage.

10. Conteneur selon l'une quelconque des revendications 7 à 9, caractérisé en ce que le fond du tiroir est incliné en direction de l'orifice (22).

## FIG. 1

## FIG. 2

# FIG. 3

# FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-A-3 635 155  (RIETBERGWERKE)<br>* Colonne 4, ligne 60 - colonne 6, ligne 7; figures 1,2; revendications 1,4 *<br>--- | 1,3 | B 65 F    1/00<br>B 65 D   88/54 |
| A | US-A-2 199 970  (MITCHELL)<br>--- | | |
| A | FR-A-2 577 902  (POULOVIN)<br>--- | | |
| A | FR-A-1 034 292  (VAYSSET)<br>----- | | |

**DOMAINES TECHNIQUES RECHERCHES (Int. Cl.4)**

B 65 F
B 65 D

**Le présent rapport a été établi pour toutes les revendications**

| Lieu de la recherche | Date d'achèvement de la recherche | Examinateur |
|---|---|---|
| LA HAYE | 30-05-1989 | MARTENS L.G.R. |